# FASCICULE DE BREVET EUROPEEN

(11) **EP 0 803 723 B1**
(45) Date de publication et mention de la délivrance du brevet: **09.07.2003**
(21) Numéro de dépôt: 97400866.6
(22) Date de dépôt: 17.04.1997
(51) Int. Cl.: G01N 1/10

(54) **Dispositif de prélèvement d'échantillons liquides nocifs, notamment chargés de particules solides**
Vorrichtung zur Entnahme von schädlichen Flüssigkeitsproben, insbesondere mit Festteilchen beladene
Device for taking noxious liquidsampler, in particular loaded with solid particulates

(30) Priorité: 22.04.1996 FR 9605011
(43) Date de publication de la demande: 29.10.1997
(73) Titulaire: COMPAGNIE GENERALE DES MATIERES NUCLEAIRES, 78140 Velizy Villacoublay (FR)
(72) Inventeur: Kerlau, Daniel, 92290 Chatenay Malabry (FR); Prevost, Thierry, 78990 Elancourt (FR); Roux, Patrice, 75015 Paris (FR)
(74) Mandataire: Poulin, Gérard

(56) Documents cités:
- EP-A- 0 003 936
- EP-A- 0 078 212
- EP-A- 0 155 107
- EP-A- 0 296 917
- EP-A- 0 511 097
- FR-A- 2 347 671
- FR-A- 2 555 746
- FR-A- 2 633 395
- GB-A- 2 229 422

## Description

L'invention concerne un dispositif de prélèvement d'échantillons liquides radioactifs ou nocifs pour une autre raison, notamment chargés de particules solides, et qui peuvent prendre toutes les nuances de turbidité ou de consistance depuis les liquides les moins visqueux jusqu'aux boues.

Le prélèvement d'échantillons liquides obéit à des contraintes particulières dans les industries nucléaires à cause de leur caractère dangereux. Les produits à analyser parviennent généralement, avant le prélèvement, dans des cuves auxquelles aboutissent des conduits de prélèvement qui traversent une paroi de protection et conduisent à une zone affectée à l'analyse. On dispose des élévateurs à bulles ("*air lifts*") dans les cuves pour faire monter le liquide dans les conduits de prélèvement. Les échantillons sont ensuite introduits dans des flacons hermétiquement clos, appelés cruchons par la demanderesse. Ces cruchons sont transférés par un réseau de transfert pneumatique vers des installations d'analyse. Le mode de remplissage classique consiste à percer le bouchon des flacons, qui est en caoutchouc, par une aiguille située au bout du conduit de prélèvement, ce qui dispense d'ôter ce bouchon : l'échantillon est aspiré dans le flacon préalablement mis sous vide en passant par l'aiguille. Mais il est clair que ce procédé ne convient plus pour les échantillons visqueux, hétérogènes ou chargés de grosses particules à cause de la finesse de l'aiguille.

Le document FR-A-2 633 395 décrit cependant un dispositif de prélèvement qui présente certaines ressemblances avec l'invention : le flacon à emplir est débarrassé de son bouchon et appliqué sous une platine sous laquelle débouchent des conduits du circuit de prélèvement qui permettent de le vider de son contenu gazeux et de l'emplir de liquide. Mais ces conduits ne sont qu'une dérivation du circuit de prélèvement, qui est continu même quand le flacon est retiré, de sorte qu'il est difficile de prévoir la quantité et la composition du liquide qui emprunte la dérivation et demeure dans le flacon, dont le remplissage peut être problématique. Les échantillons recueillis seront de toute façon perturbés par un élévateur à bulles qui reste présent à l'entrée du circuit de prélèvement, même si un éjecteur pneumatique est disposé sur le circuit en aval du flacon, mais cet éjecteur n'assure pas la circulation du liquide mais une petite élévation de celui-ci dans le circuit pour amorcer l'élévateur.

L'objet principal de l'invention est donc la satisfaction du besoin de prélever des échantillons bien représentatifs du mélange ou de la suspension solide-liquide dont ils sont extraits, en évitant d'altérer sa composition et la répartition granulométrique des particules et en évitant également de séparer les constituants, grâce à un dispositif de prélèvement d'échantillons fondé sur un principe complètement différent. Cela implique de remplacer l'aiguille et l'élévateur à bulles par des moyens qui ne compromettent pas la sécurité et le confinement du dispositif, malgré l'ouverture des flacons qui devient nécessaire.

Cet objet est atteint si le dispositif de prélèvement d'échantillons de liquides nocifs comprend un circuit de prélèvement comprenant une branche d'aspiration menant à la cuve et une branche de refoulement, un organe de circulation de liquide à travers le circuit de prélèvement et une platine sous laquelle débouchent des extrémités des branches d'aspiration et de prélèvement, un bord des flacons étant appliqué sous la platine autour desdites extrémités, caractérisé en ce que les branches d'aspiration et de prélèvement sont dépourvues de communication autre que par les flacons appliqués sous la platine, l'organe de circulation de liquide est situé sur la branche de refoulement et la branche d'aspiration est reliée à un évent. Le procédé consiste alors à aspirer le produit prélevé et à le faire passer le long du circuit de prélèvement, dont le flacon fait temporairement partie quand il est pressé contre la surface inférieure de la platine, en raccordant les branches du circuit de prélèvement, qui sont coupées l'une de l'autre quand le flacon est retiré. L'aspiration est menée pendant un temps suffisant pour que le produit contenu dans le flacon soit représentatif du contenu de la cuve d'origine. Ce flacon est ensuite retiré et rebouché. L'aspiration ne trouble ni ne perturbe sensiblement le produit et les conduits ont une section suffisante pour que les plus grosses particules ne soient pas arrêtées. La section est optimisée pour obtenir une vitesse de circulation suffisante afin d'empêcher la ségrégation dans les circuits. La mise à l'évent du circuit de prélèvement, alors que l'aspiration est poursuivie, permet de vider le circuit de prélèvement et d'éviter les dangers et la contamination des échantillons suivants que produiraient le séjour du liquide aspiré. Le flacon reste partiellement empli quand le reste du circuit de prélèvement est vidangé.

Un autre objectif de l'invention est de permettre des prélèvements sans danger pour le personnel de l'installation. On conseille donc d'ajouter au dispositif une enceinte munie d'accès d'entrée et de sortie des flacons, les branches de prélèvement et d'aspiration et la platine étant situées dans l'enceinte, les branches de prélèvement et d'aspiration étant raccordées à des conduits d'aspiration et de refoulement extérieurs à l'enceinte, et, disposés dans l'enceinte, des moyens de préhension des flacons, d'enlèvement et de remise de bouchons des flacons, et d'application du bord des flacons sous la platine, l'évent comprenant un conduit débouchant dans l'enceinte et ayant une portion extérieure à l'enceinte et munie d'une vanne d'éventement.

Il est avantageux que le dispositif soit construit sous forme d'un véhicule mobile sur le sol grâce à des roues sur lesquelles l'enceinte est montée, et qu'on peut approcher au choix des conduits de prélèvement, dont les extrémités dépassent de la paroi de protection, selon l'essai ou l'analyse qu'on veut entreprendre. L'organe de circulation peut être une pompe, cependant l'emploi d'une pompe d'aspiration du produit peut être problématique dans les conditions particulières à l'invention, car les pompes usuelles, à pièces mécaniques mobiles, seraient souvent souillées ou endommagées par les impuretés et on ne désire pas procéder à des changements de pompe qui impliqueraient une ouverture supplémentaire de l'enceinte et l'apparition d'une pièce contaminée à l'extérieur. C'est pourquoi on préconise d'utiliser un hydro-éjecteur en guise de pompe ; le circuit de prélèvement comprend alors une branche motrice alimentée en liquide sous pression et aboutissant à la branche de refoulement du circuit de prélèvement.

Les risques de mauvais fonctionnement ou d'avarie sont alors très réduits. Des dispositions sont toutefois prévues pour éviter les colmatages des conduits d'aspiration et de refoulement par les boues ou les particules. On préconise alors que l'hydro-éjecteur et des parties adjacentes à lui des branches de rejet et de prélèvement forment un élément d'organe de circulation unitaire amovible, et que le dispositif comprenne en outre un ensemble de décolmatage qui remplace l'élément d'organe de circulation et raccorde la branche motrice à des parties complémentaires des branches d'aspiration et de refoulement pour projeter à volonté du liquide sous pression vers les branches d'aspiration ou de refoulement afin de les déboucher.

Le procédé peut être accompli plus facilement avec d'autres perfectionnements, qui peuvent être adoptés séparément ou en combinaison : une visseuse-dévisseuse éventuellement automatique apte à saisir les bouchons des flacons, à les tourner et à les soulever quand ils sont détachés ; un support de flacons comprenant un plateau élévateur grâce auquel les flacons peuvent être pressés sous la platine ; et un support mobile tel qu'un bras tournant pour apporter le flacon tour à tour à la visseuse-dévisseuse et à la platine.

L'invention va maintenant être décrite plus en détail à l'aide des figures illustratives suivantes qui en décrivent une réalisation :
- la figure 1 est une vue d'ensemble du dispositif,
- la figure 2 est une vue du support des flacons,
- la figure 3 est une vue de la platine et de l'organe de circulation,
- la figure 4 est une vue de l'ensemble de raccordement destiné au décolmatage des conduits,
- et la figure 5 est une vue de la visseuse-dévisseuse.

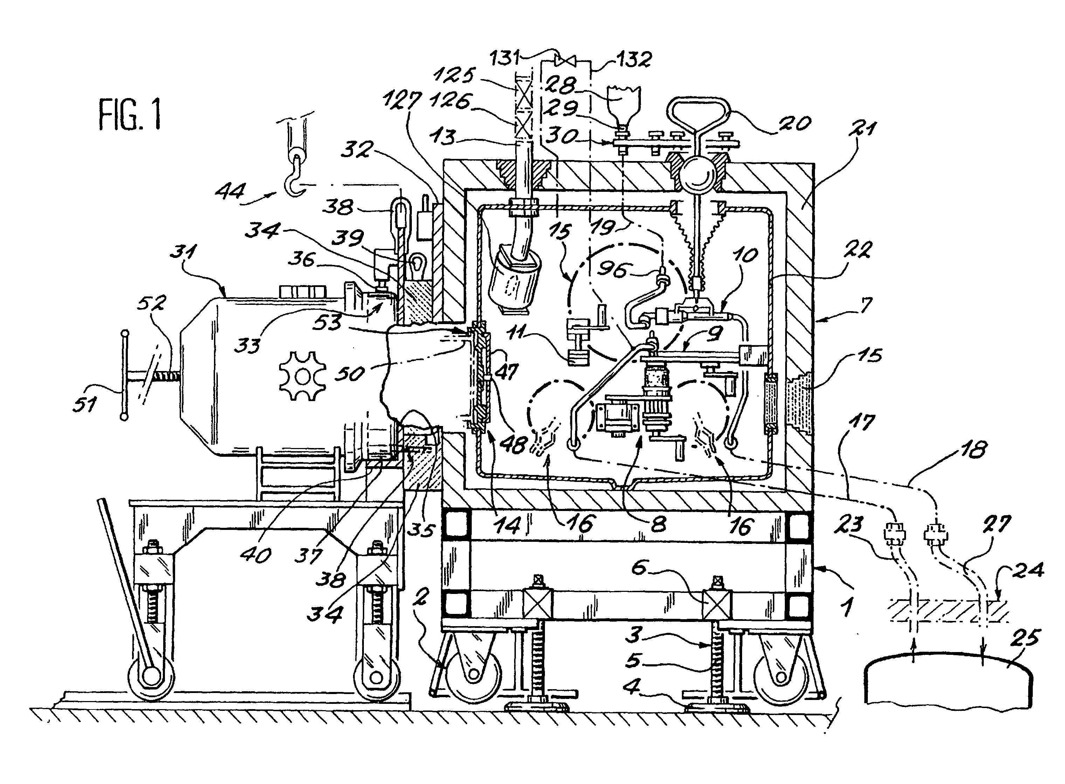

Comme on le voit sur la figure 1, le dispositif de l'invention est un véhicule monté sur un châssis 1 muni de roues 2 qui permettent de le promener devant des conduits d'aspiration et de refoulement de produit 23 et 27 (disposés en pratique en rangée ; un seul de chaque est représenté), et de pieds 3 comprenant un patin 4 au bout d'une tige filetée 5, qu'on peut tourner dans un écrou 6 solidaire du châssis 1 pour poser le patin 4 au sol et arrêter ainsi le véhicule en soulevant les roues 2 à l'emplacement souhaité pour le prélèvement.

Le châssis 1 porte une enceinte 7 de protection qui est occupée en particulier par un support 8 de flacons, une platine 9, un organe de circulation 10, une visseuse-dévisseuse 11 qui feront l'objet des figures suivantes. On trouve aussi des éléments qui traversent l'enceinte 7, et en particulier un conduit 13 d'entrée de flacons, une ouverture 14 de sortie des flacons, des hublots d'observation 15, des ouvertures de passage de pinces 16 grâce auxquels le travail dans l'enceinte 7 est possible, un tronçon de tuyauterie de branche d'aspiration 17 reliant le conduit d'aspiration 23 à la platine 9, un tronçon de tuyauterie de branche de refoulement 18 qui relie la platine 9, au conduit de refoulement 27, un tronçon de tuyauterie de branche motrice 19, et une tirette 20 portant l'organe de circulation 10, pour soulever de la platine 9 si on le souhaite ; et aussi des canalisations de transport d'électricité ou de fluide de commande qui ne sont pas représentées. L'enceinte 7 est composée d'une paroi 21 externe de protection radiologique qui absorbe les radiations et d'un caisson 22 formant une doublure interne et qui assure l'étanchéité.

Le conduit d'entrée 13 comporte deux vannes 125 et 126 montées en série, formant sas et qui permettent l'introduction échelonnée à volonté et sûre des flacons 67. Il est terminé par une niche 127 où les flacons peuvent être saisis.

L'ouverture de sortie 14 est conçue pour qu'on puisse y accoler un château 31, c'est-à-dire une enceinte de protection radiologique mobile destinée au transport des échantillons radioactifs prélevés vers l'installation d'analyse. La paroi 21 est munie d'une porte d'enceinte 32 comprenant notamment une plaque de protection 34 coulissante qui bouche l'ouverture 14. Une porte de château 33 de même espèce ferme l'ouverture du château 31. Si on accouple la plaque de protection 34 à la porte de château 33 et si on soulève cet assemblage en tirant sur un anneau de levage 39 disposé au sommet de la plaque de protection 34, l'intérieur du château 31 est mis en communication avec l'ouverture 14.

Il suffit ensuite d'ouvrir une porte 47 du caisson 22 pour qu'on puisse transférer les flacons remplis d'échantillons dans le château 31. La porte de caisson 47 s'ouvre vers l'intérieur du caisson 22, en tirant sur une poignée 48 par une des pinces engagées dans le caisson 22.

Les conduits d'aspiration et de refoulement 23 et 27 de produit aboutissent à des cuves 25 remplies de produit à prélever et analyser ; ces cuves 25 sont situées sous une dalle de protection biologique 24. Quant à la branche motrice 19, elle conduit à un réseau d'eau sous pression 28 par un conduit d'alimentation 29 pouvant être ouvert ou fermé par une vanne 30 solidaire de l'enceinte 7.

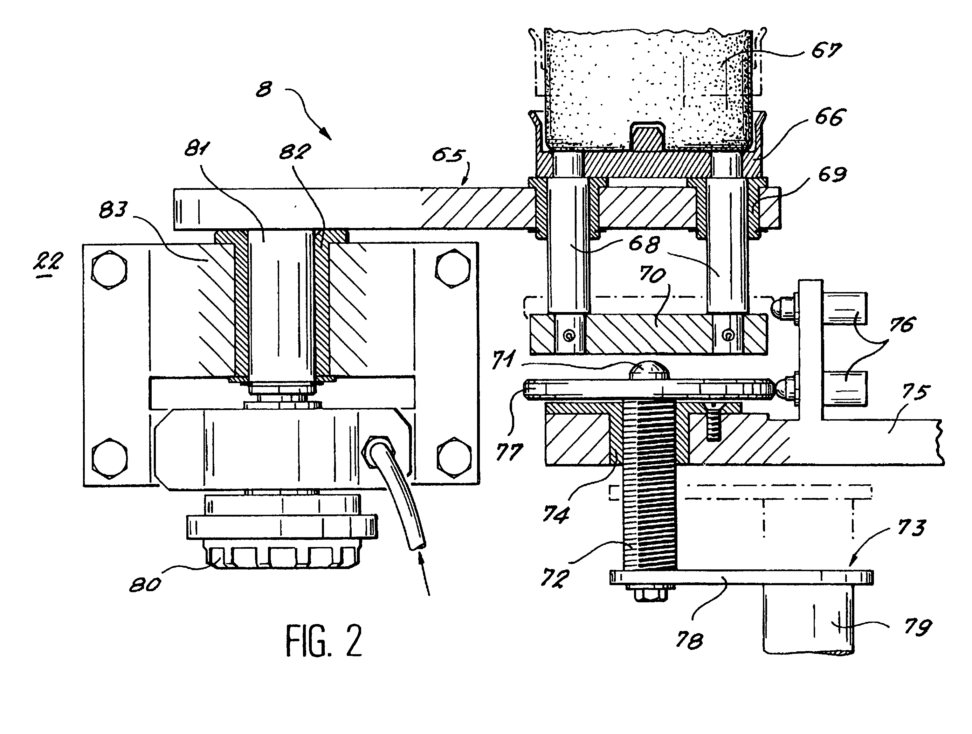

Le support 8 des flacons est illustré à la figure 2. Il comprend pour l'essentiel un bras tournant 65 et un plateau élévateur 66 sur lequel un flacon 67, appelé cruchon désormais d'après le terme habituel chez la demanderesse, est posé. Le plateau élévateur 66 est fixé au sommet de deux colonnettes 68 qui coulissent dans des bagues 69 de guidage établies à travers le bras tournant 65. Les pieds des colonnes 68 sont unis entre eux par l'intermédiaire d'une base 70 à laquelle elles sont fixées et qui surplombe un sommet arrondi 71 d'une tige filetée 72 dont l'extrémité inférieure est solidaire d'une manivelle 73. La tige filetée 72 est engagée dans une douille filetée 74 fixée à une console 75 elle-même fixée au caisson 22. En tournant la manivelle 73, on fait monter la tige filetée 72 et par conséquent la base 70, les colonnettes 68 et le plateau élévateur 66 dès que le sommet arrondi 71 vient en contact de la base 70. Deux capteurs de fin de course 76 sont fixés à la console 75, coopérant avec un disque 77 solidaire de la tige filetée 72 afin de vérifier que les états extrêmes du mouvement vertical sont atteints. Des butées mécaniques sont constituées peu au-delà par le disque 77 et le levier 78 de la manivelle 73 contre les extrémités de la douille filetée 74 logée dans la console 75.

Le déplacement vertical des cruchons 67 est assuré par une action manuelle sur la poignée 79 de la manivelle 73 par le moyen des pinces 16.

Le bras tournant 65 est tourné au moyen d'un vérin rotatif 80 qui lui transmet son mouvement par l'intermédiaire d'un axe vertical 81 retenu dans un coussinet 82 d'une structure d'appui 83 solidaire du caisson 22.

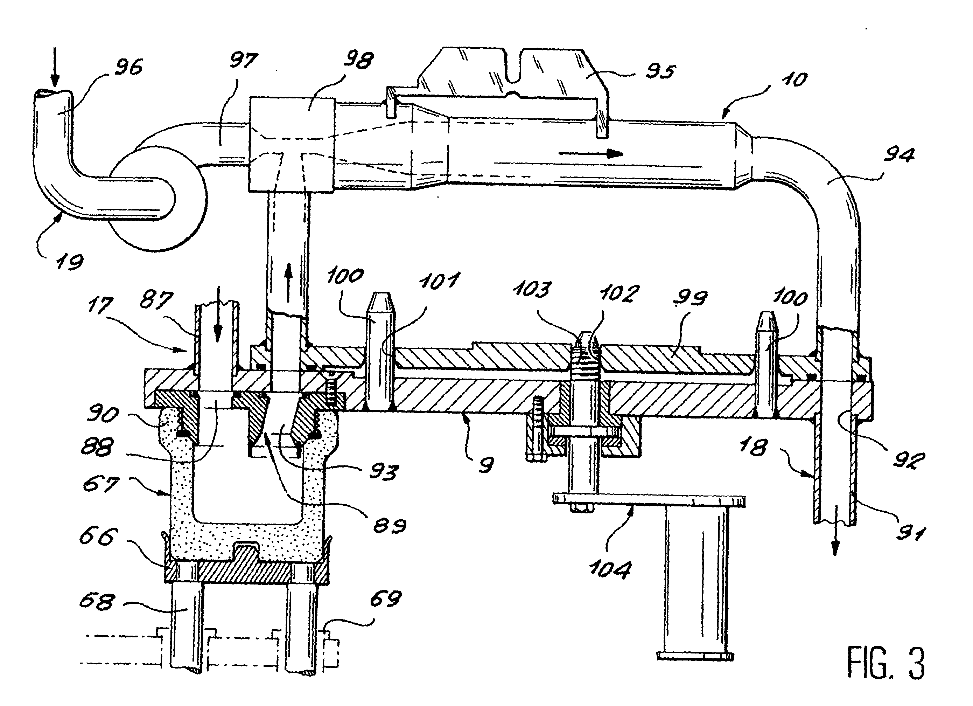

Le cruchon 67 peut être élevé par la tige filetée 72 jusqu'à s'appuyer sur la surface inférieure de la platine 9 après avoir été apporté sous elle, ce qui est illustré à la figure 3.

La branche d'aspiration 17 comprend un tuyau 87 soudé à la surface supérieure de la platine 9 et qui est prolongé à travers elle pour former un orifice 88 qui débouche à la surface inférieure d'une bride de distribution 89 de la platine 9 autour de laquelle le bord 90 du cruchon 67 vient s'ajuster. La branche de refoulement 18 comprend quant à elle un autre tuyau 91 soudé à la surface inférieure de la platine 9, à l'écart de la bride de distribution 89. Deux orifices 92 et 93 traversent la platine 9. L'orifice 92 en aval de l'organe de circulation 10 prolonge le tuyau 91 alors que l'orifice 93 en amont de l'organe de circulation 10 débouche à la surface inférieure de la bride de distribution 89, à un niveau inférieur à l'orifice 88 et dans le bord 90 du flacon 67, qui ferme donc le circuit de prélèvement de liquide, dont les branches d'aspiration et de refoulement sont par ailleurs séparées. Les deux orifices 92 et 93 sont réunis par un tuyau en arceau 94 de l'organe de circulation 10 au milieu duquel on a soudé une plaquette 95 servant de poignée à la tirette 20. Quant à la branche motrice 19, elle se termine par une partie souple 96 et qui est raccordée à un embranchement 97 appartenant à l'organe de circulation 10 et qui se réunit au tuyau en arceau 94 en le prolongeant. Le confluent est occupé par un venturi 98 qui constitue la partie essentielle de l'organe de circulation 10. On s'aperçoit, en revenant à la figure 1, que l'ouverture de la vanne 30 fait circuler l'eau sous pression originaire de la source 28 et ayant passé par le conduit d'alimentation 29 à travers la branche motrice 19 et le venturi 98 pour la faire ensuite couler vers l'aval de l'organe de circulation 10 en passant notamment par le tuyau 91 et le conduit de refoulement 27 jusqu'à la cuve d'origine 25. Ce mouvement s'accompagne d'une dépression dans le venturi 98 sous l'effet de laquelle le liquide à prélever est aspiré de la cuve 25 par un mouvement régulier qui évite de le brasser ou de le perturber d'aucune manière : il monte dans la branche d'aspiration 17, passe dans le tuyau 87, dans le flacon 67 et arrive finalement au venturi 98, après quoi il se mêle au liquide moteur et son excédent retourne dans la cuve 25. L'organe de circulation 10 est donc un hydro-éjecteur dépourvu de pièces mécaniques tournantes ou mobiles d'une autre manière. Quand la vanne 30 est refermée, du produit originaire de la cuve 25 demeure dans le cruchon 67 qui peut alors être retiré de la platine 9 et rebouché par la visseuse-dévisseuse 11.

Le tuyau 87 est mis à l'évent en ouvrant une vanne d'éventement 131 disposée sur un tuyau d'évent 132 relié au tuyau 87 (figure 1) avant d'arrêter le débit d'eau motrice, ce qui a pour effet d'arrêter l'aspiration du contenu de la cuve 25. La vanne d'éventement 131 est installée au sommet du tuyau d'évent 132, hors de l'enceinte 7. Cependant, l'extrémité du tuyau d'évent 132 retourne dans l'enceinte 7 pour éviter tout risque de projection de produit contaminé à l'extérieur. L'aspiration amène alors le tuyau 87 à se vider et le transfert de produit se poursuit par siphonnage jusqu'à ce que le niveau du liquide du flacon 67 soit descendu sous le bord de l'orifice 93 (plus bas que celui de l'orifice 88) ; l'eau motrice est ensuite coupée, et le siphonnage se poursuit dans l'organe de circulation 10 jusqu'à ce qu'il soit vidé. Le cruchon 67 reste à peu près rempli de produit prélevé qu'aucun résidu liquide de l'organe de circulation 10 ne vient troubler en y coulant.

L'organe de circulation 10 comprend encore une semelle 99 inférieure et posée sur la platine 9. L'ajustement correct de l'organe de circulation 10 est assuré par deux pions 100 qui traversent des perçages 101 de la semelle 99. Les extrémités du tuyau en arceau 94 prolongent alors bien les orifices 92 et 93, et de plus une tige filetée 102 suspendue à la platine 9 se trouve devant un taraudage 103 qui traverse la semelle 99. Il suffit alors de tourner une manivelle 104 qui entraîne la tige filetée 102 pour que celle-ci s'engage dans le taraudage 103 et assure le serrage de la semelle 99, et donc l'étanchéité aux raccordements des parties de la branche d'aspiration 17 et des parties de la branche de refoulement 18 et le maintien en place de l'organe de circulation 10.

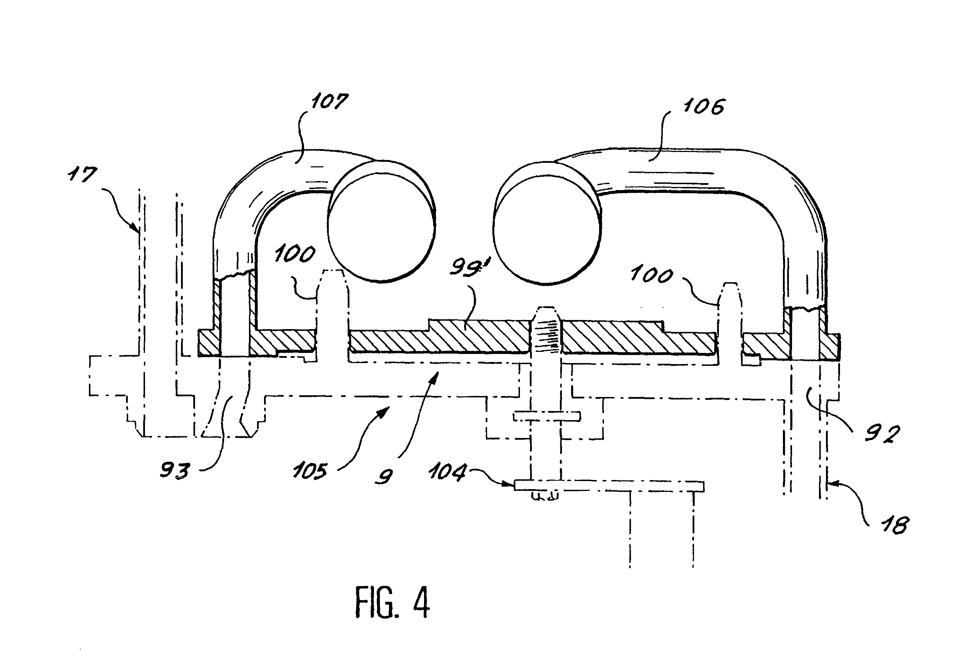

L'organe de circulation 10 peut être remplacé, après avoir été soulevé par la tirette 20, par un mannequin 105 représenté à la figure 4 et qui comprend, outre une semelle exactement semblable à la semelle 99 de l'organe de circulation 10 et qui porte donc la référence 99', sans qu'aucune description complémentaire soit jugée nécessaire, des tronçons de raccordement 106 et 107 de décolmatage et qui viennent respectivement en prolongement des orifices 92 et 93 quand le mannequin 105 est monté. En branchant l'extrémité de la partie souple 96 de la branche motrice 19 aux extrémités libres de ces tronçons de raccordement 106 et 107, on peut faire jaillir l'eau sous pression respectivement dans la partie aval de la branche de refoulement 18 et, à contre-courant de l'écoulement du liquide prélevé de la cuve 25, dans la branche d'aspiration 17 à travers le cruchon 67. Ces sections de canalisations pourraient donc être décolmatées si elles étaient saisies par une accumulation de particules. Autrement, le mannequin 105 n'est pas utilisé mais démonté de la platine 9 et rangé quelque part dans le caisson 22.

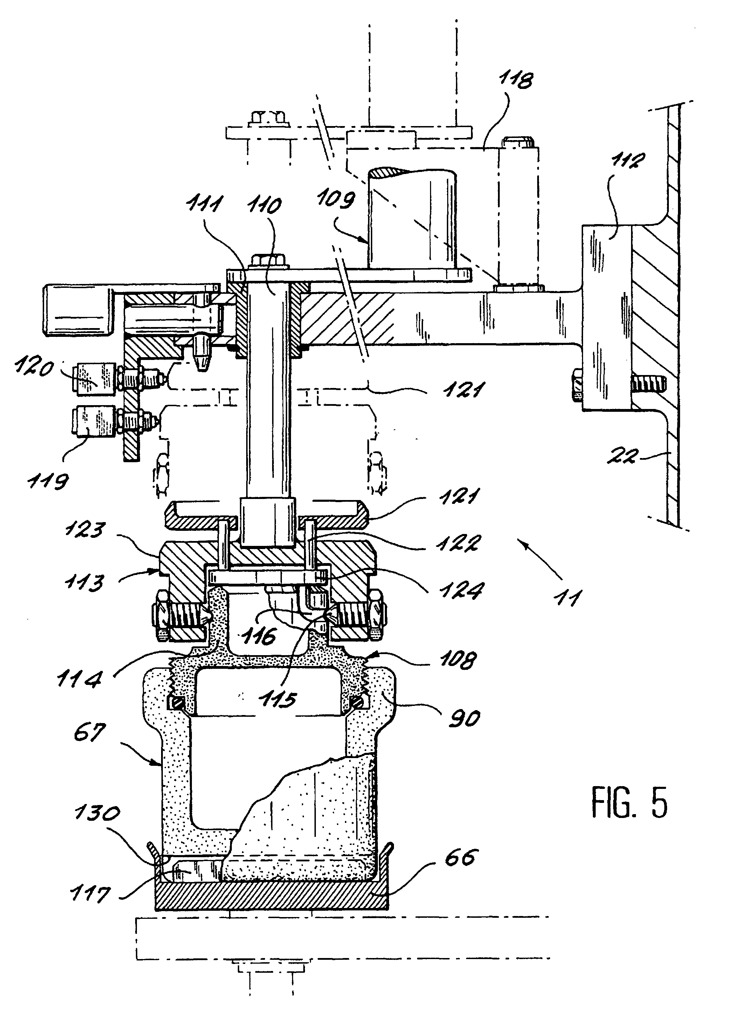

On passe maintenant au dispositif de vissage et de dévissage, illustré complètement à la figure 5.

Les cruchons 67 portent un bouchon 108 vissé à leur bord 90. L'élément moteur de la visseuse-dévisseuse 11 est ici encore une manivelle 109 qui fait tourner un axe 110 soutenu dans un palier 111 d'une structure d'appui 112 fixée au caisson 22. L'axe 110 porte à son extrémité inférieure un mandrin 113 évidé qui vient coiffer un mamelon 114 au sommet du bouchon 108. Le mandrin 113 est muni de saillies 115 sur sa face interne qui peuvent pénétrer dans des rainures en baïonnette 116 du manchon 114. Pour saisir le bouchon 108 d'un cruchon 67 récemment apporté sous la visseuse-dévisseuse 11, on soulève la poignée de la manivelle 109 -ce qui est possible à cause de la faculté de l'axe 110 de coulisser dans le palier 111- puis on la laisse retomber tout en la tournant pour que les saillies internes 115 pénètrent dans les rainures en baïonnette 116. Quand elles arrivent au bout de ces rainures, la poursuite du mouvement de la manivelle 109 entraîne le bouchon 108 et le dévisse. A cet effet, le fond du cruchon 67 est entaillé d'une rainure 130 rectiligne que vient occuper un tenon 117 établi diamétralement sur la surface d'appui du plateau élévateur 66 et qui retient ainsi le corps du cruchon 67 en rotation. Quand le dévissage est terminé, la manivelle 109 est entièrement remontée et posée sur une console 118 de la structure d'appui 112 jusqu'à ce que le cruchon 67, rempli après avoir été emporté sous l'organe de circulation 10 puis ramené, doive être refermé, ce qui est fait par une opération inverse de la manivelle 109. On remarquera aussi deux capteurs 119 et 120 fixés à la structure d'appui 112 et dont le premier détecte la présence du mandrin 113 quand celui-ci est entièrement remonté, alors que le second, situé un peu au-dessus du premier, détecte la présence d'un disque 121 soutenu par des colonnettes 122 qui coulissent à travers un couvercle 123 du mandrin 113 et qui sont unies par une couronne 124 qui s'étend sous ce couvercle 123. Quand aucun bouchon 108 n'est saisi par le mandrin 113, le disque 121 repose sur le couvercle 123 et la couronne 124 lui est suspendue. Quand au contraire un bouchon 108 est retenu par les saillies internes 115, son mamelon 114 soulève la couronne 124 et le disque 121, ce qui permet à ce dernier de parvenir à hauteur du second capteur 120 et d'être repéré par lui quand la manivelle 109 est complètement remontée et que le mandrin 113 arrive à hauteur du premier capteur 119. On obtient donc un fonctionnement plus sûr.

Quand les prélèvements voulus ont été faits, les cruchons 67 pleins peuvent être repris par une des pinces 16 et introduits dans le château 31.

## Revendications

1. Dispositif de prélèvement d'échantillons liquides nocifs, notamment chargés de particules solides, à partir d'une cuve (25), pour verser lesdits échantillons dans des flacons (67), comprenant un circuit de prélèvement comprenant une branche d'aspiration (17) menant à la cuve (25) et une branche de refoulement (18), un organe de circulation de liquide (10) à travers le circuit de prélèvement et une platine (9) sous laquelle débouchent des extrémités (88, 93) des branches d'aspiration et de prélèvement, un bord (90) des flacons (67) étant appliqué sous la platine autour desdites extrémités, **caractérisé en ce que** les branches d'aspiration et de prélèvement sont dépourvues de communication autre que par les flacons appliqués sous la platine, l'organe de circulation de liquide (10) est situé sur la branche de refoulement et la branche d'aspiration est reliée à un évent (131, 132).

2. Dispositif de prélèvement d'échantillons liquides nocifs selon la revendication 1, **caractérisé en ce qu'**il comprend une enceinte (7) munie d'accès (13, 14) d'entrée et de sortie des flacons (67), les branches de prélèvement et d'aspiration et la platine étant situées dans l'enceinte, les branches de prélèvement et d'aspiration étant raccordées à des conduits d'aspiration (23) et de refoulement (27) extérieurs à l'enceinte (7), et, disposés dans l'enceinte (7), des moyens (8, 11, 16) de préhension des flacons, d'enlèvement et de remise de bouchons (108) des flacons (67), et d'application du bord (90) des flacons sous la platine, l'évent (131, 132) comprenant un conduit (132) débouchant dans l'enceinte (7) et ayant une portion extérieure à l'enceinte et munie d'une vanne d'éventement (131).

3. Dispositif de prélèvement d'échantillons liquides nocifs selon la revendication 2, **caractérisé en ce qu'**il est mobile, l'enceinte étant montée sur des roues (2).

4. Dispositif de prélèvement d'échantillons liquides nocifs selon la revendication 1, **caractérisé en ce que** l'organe de circulation (10) comprend un hydro-éjecteur (97, 98) et le circuit de prélèvement comprend une branche motrice (19) alimentée en liquide sous pression et aboutissant à la branche de refoulement (18).

5. Dispositif de prélèvement d'échantillons liquides nocifs selon la revendication 4, **caractérisé en ce que** l'hydro-éjecteur (97, 98) et des parties adjacentes (94) des branches de refoulement et d'aspiration forment un élément unitaire et amovible de l'organe de circulation, et l'élément de l'organe de circulation et la platine sont munis de moyens de fixation mutuelle et de raccordement (99 à 104) entre des parties complémentaires de la branche d'aspiration et de la branche de refoulement, fixées à la platine (9), et l'élément de l'organe de circulation (10).

6. Dispositif de prélèvement d'échantillons liquides nocifs selon la revendication 5, **caractérisé en ce que** l'élément unitaire et amovible de l'organe de circulation comprend une semelle (99) posée sur une face supérieure de la platine (9) et assemblée de façon démontable à la platine.

7. Dispositif de prélèvement d'échantillons liquides nocifs selon la revendication 5, **caractérisé en ce qu'**il comprend un ensemble de décolmatage (105) composé de deux tuyaux (106, 107) et des moyens (99') de fixation à la platine (9) et de raccordement des tuyaux auxdites parties complémentaires de la branche d'aspiration et de la branche de refoulement par une extrémité, l'autre extrémité des tuyaux pouvant être raccordée à la branche motrice (19).

8. Dispositif de prélèvement d'échantillons liquides nocifs selon la revendication 7, **caractérisé en ce que** les tuyaux (106, 107) sont séparés et la branche motrice a une partie souple (96).

9. Dispositif de prélèvement d'échantillons liquides nocifs selon la revendication 7, **caractérisé en ce que** l'ensemble de décolmatage comprend une semelle (99') identique à la semelle (99) de l'élément unitaire et amovible de l'organe de circulation.

10. Dispositif de prélèvement d'échantillons liquides nocifs selon la revendication 2, **caractérisé en ce que** le moyen d'application comprend un support des flacons (67) comprenant un plateau élévateur (66).

11. Dispositif de prélèvement d'échantillons liquides nocifs selon la revendication 10, **caractérisé en ce que** les moyens d'enlèvement et de remise des bouchons (11) consistent en un appareil de vissage et de dévissage mécanique ayant une tête (113) apte à saisir les bouchons (108), à les tourner et à les soulever des flacons.

12. Dispositif de prélèvement d'échantillons liquides nocifs selon la revendication 11, **caractérisé en ce que** les moyens de préhension des flacons comprennent un support mobile (65) porteur du plateau élévateur (66) pour placer ledit plateau tour à tour sous la platine (9) et l'appareil de vissage et de dévissage (11), ledit plateau étant conçu avec un élément (117) d'arrêt des flacons en rotation.

13. Dispositif de prélèvement d'échantillons liquides nocifs selon la revendication 10, **caractérisé en ce que** les moyens d'élévation des flacons comprennent une manivelle (79) de commande du plateau élévateur.

14. Dispositif de prélèvement d'échantillons liquides nocifs selon la revendication 11, **caractérisé en ce que** l'appareil de vissage et de dévissage comprend une manivelle (109) de commande de la tête (113) ayant un axe de rotation coulissant (110), et une console (118) d'appui de la manivelle (109) à une position éloignée des flacons (67).

15. Dispositif de prélèvement d'échantillons liquides nocifs selon la revendication 2, **caractérisé en ce que** les accès à travers l'enceinte comprennent un conduit d'introduction des flacons et une porte de raccordement à un conteneur mobile (31).

## Patentansprüche

1. Vorrichtung zur Entnahme schädlicher Flussigkeitsproben, insbesondere solcher, die mit Feststoffteilchen belastet sind, aus einem Behälter (25), um die Proben in Fläschchen (67) zu schütten, mit einem Entnahmekreis, der einen zum Behälter (25) führenden Ansaugzweig (17) und einen Förderzweig (18) umfasst, einem Element (10) zum Zirkulieren von Flüssigkeit durch den Entnahmekreis und einer Platine (9), unter der die Enden (88,93) des Ansaugzweigs und des Entnahmezweigs münden, wobei ein Rand (90) der Fläschchen (67) unter der Platine um die Enden herum angebracht ist, **dadurch gekennzeichnet, dass** der Ansaugzweig und der Entnahmezweig keine weitere Verbindung als die zu den unter der Platine angebrachten Fläschchen aufweisen, wobei das Flüssigkeits-Zirkulationselement (10) am Förderzweig gelegen ist und der Ansaugzweig mit einer Be-/Entlüftung (131,132) verbunden ist.

2. Vorrichtung zur Entnahme schädlicher Flüssigkeitsproben gemäß Anspruch 1, **dadurch gekennzeichnet, dass** sie ein Gehäuse (7) umfasst, das mit Zugängen (13,14) zum Eintritt und zum Austritt der Fläschchen (67) versehen ist, wobei die Entnahme- und Ansaugzweige und die Platine in dem Gehäuse gelegen sind, und die Entnahme- und Ansaugzweige mit den Ansaugleitungen (23) und Förderleitungen (27) außerhalb des Gehäuses (7) verbunden sind und in dem Gehäuse (7) Mittel (8,11,16) zum Greifen der Fläschchen, zum Abnehmen und Wiederaufsetzen der Verschlüsse (108) der Fläschchen (67) und zum Anlegen des Randes (90) der Fläschchen unter die Platine angeordnet sind, wobei die Be-/Entlüftung (131,132) eine Leitung (132) umfasst, die in das Gehäuse (7) mündet, und einen Abschnitt außerhalb des Gehäuses aufweist, der mit einem Be-/Entlüftungsventil (131) versehen ist.

3. Vorrichtung zur Entnahme schädlicher Flüssigkeitsproben gemäß Anspruch 2, **dadurch gekennzeichnet, dass** sie beweglich ist, wobei das Gehäuse auf zwei Rädern (2) angebracht ist.

4. Vorrichtung zur Entnahme schädlicher Flüssigkeitsproben gemäß Anspruch 1, **dadurch gekennzeichnet, dass** das Zirkulationselement (10) ein Hydro-Ausstoßelement (97,98) aufweist und der Entnahmekreiseinen Motorzweig (19) umfasst, der mit Flüssigkeit unter Druck gespeist wird und in den Förderzweig (18) mündet.

5. Vorrichtung zur Entnahme schädlicher Flüssigkeitsproben gemäß Anspruch 4, **dadurch gekennzeichnet, dass** das Hydro-Ausstoßelement (97,98) und benachbarte Abschnitte (94) der Förder- und Ansaugzweige ein einheitliches und vom Zirkulationselement entfernbares Element bilden, und das Element des Zirkulationselements und die Platine mit Mitteln zur gegenseitigen Befestigung und Verbindung (99 bis 104) zwischen an der Platine (9) und dem Element des Zirkulationselements (10) befestigten komplementären Abschnitten des Ansaugzweigs und des Förderzweigs versehen sind.

6. Vorrichtung zur Entnahme schädlicher Flüssigkeitsproben gemäß Anspruch 5, **dadurch gekennzeichnet, dass** das einheitliche und von dem Zirkulationselement entfernbare Element ein auf eine Oberseite der Platine (9) aufgelegte und abnehmbar an der Platine angebrachte Auflageplatte (semelle) (99) umfasst.

7. Vorrichtung zur Entnähme schädlicher Flüssigkeitsproben gemäß Anspruch 5, **dadurch gekennzeichnet, dass** es eine Dekolmatiereinheit (105) umfasst, die aus zwei Rohren (106,107) sowie Mitteln (99') zum Befestigen an der Platine (9) und zum Verbinden der Rohre mit den komplementären Abschnitten des Ansaugzweigs und des Förderzweigs über ein Ende gebildet ist, wobei das andere Ende der Rohre mit dem Motorzweig (19) verbunden werden kann.

8. Vorrichtung zur Entnahme schädlicher Flüssigkeitsproben gemäß Anspruch 7, **dadurch gekennzeichnet, dass** die Rohre (106,107) getrennt sind und der Motorzweig einen elastischen Abschnitt (96) aufweist.

9. Vorrichtung zur Entnahme schädlicher Flüssigkeitsproben gemäß Anspruch 7, **dadurch gekennzeichnet**, loss die Dekolmatiereinheit eine Auflageplatte (99') umfasst, die identisch mit der Auflageplatte (99) des einheitlichen Elements ist und vom Zirkulationselement abnehmbar ist.

10. Vorrichtung zur Entnahme schädlicher Flüssigkeitsproben gemäß Anspruch 2, **dadurch gekennzeichnet, dass** das Aufbringungsmittel einen Flaschenträger (67) mit einer Hebebühne (66) umfasst.

11. Vorrichtung zur Entnahme schädlicher Flüssigkeitsproben gemäß Anspruch 10, **dadurch gekennzeichnet, dass** Mittel zum Abnehmen und Wiedereinsetzen der Verschlüsse (11) eine mechanische Einschraub- und Losschraubvorrichtung mit einem Kopf (113), der die Verschlüsse (108) greifen, sie drehen und von den Flaschen abnehmen kann, umfaßt.

12. Vorrichtung zur Entnahme schädlicher Flüssigkeitsproben gemäß Anspruch 11, **dadurch gekennzeichnet, dass** die Entnahmemittel der Flaschen einen die Hebebühne (66) tragenden mobilen Träger (65) umfassen, um die Bühne der Reihe nach unter die Platine (9) und die Einschraub- und Losschraubvorrichtung (11) zu platzieren, wobei die Bühne mit einem Element (117) zum Anhalten der sich drehenden Flaschen versehen ist.

13. Vorrichtung zur Entnahme schädlicher Flüssigkeitsproben gemäß Anspruch 10, **dadurch gekennzeichnet, dass** die Hebemittel der Flaschen eine Steuerkurbel (79) der Hebebühne umfassen.

14. Vorrichtung zur Entnahme schädlicher Flüssigkeitsproben gemäß Anspruch 11, **dadurch gekennzeichnet, dass** die Einschraub- und Losschraubvorrichtung eine Steuerkurbel (109) des Kopfs (113) mit einer Gleit-Drehachse (110) sowie eine Konsole (118) zum Stützen der Kurbel (109) an einer von den Flaschen (67) entfernten Position-umfasst.

15. Vorrichtung zur Entnahme schädlicher Flüssigkeitsproben gemäß Anspruch 2, **dadurch gekennzeichnet, dass** die Zugänge über das Gehäuse eine Leitung zum Einführen der Flaschen und eine Öffnung zum Verbinden mit einem beweglichen Behälter (31) umfassen.

## Claims

1. A device for taking samples of noxious liquids, notably liquids charged with solid particles, from a tank (25), to pour said samples into flasks (67), including a sampling circuit that includes an aspiration arm (17) leading to the tank (25) and a return arm (18), a unit (10) for circulating liquid through the sampling circuit and a support plate (9) under which emerge the ends (88, 93) of the aspiration and sampling arms, a rim (90) of the flasks (67) being applied under the support plate around said ends, **characterized in that** the aspiration and sampling arms are without communication other than via the flasks applied under the support plate; the liquid circulation unit (10) is situated on the return arm and the aspiration arm is connected to a vent (131, 132).

2. A device for taking samples of noxious liquids according to Claim 1, **characterized in that** it includes an enclosure (7) equipped with access (13, 14) for entry and exit of the flasks (67), the sampling and aspiration arms and the support plate being situated within the enclosure, the sampling and return arms being connected to aspiration (23) and return (27) pipes outside the enclosure (7), and, arranged within the enclosure (7), means (8, 11, 16) of gripping the flasks, removing them and putting stoppers (108) in the flasks (67) and for applying the rim (90) of the flasks under the support plate, the vent (131, 132) including a pipe (132) emerging within the enclosure (7) and having a portion outside the enclosure and fitted with a venting valve (131).

3. A device for taking samples of noxious liquids according to Claim 2, **characterized in that** it is movable, the enclosure being mounted on wheels (2).

4. A device for taking samples of noxious liquids according to Claim 1, **characterized in that** the circulation unit (10) includes a jet pump (97, 98) and the sampling circuit includes a driving arm (19) supplied with liquid under pressure and ending up in the return arm (18).

5. A device for taking samples of noxious liquids according to Claim 4, **characterized in that** the jet pump (97, 98) and adjacent parts (94) of the return and aspiration arms form a single and detachable element of the circulation unit and the circulation unit element and the support plate are fitted with mutual fixing means and means for connecting complementary parts of the aspiration arm and the return arm (99 to 104) fixed to the support plate (9) and the circulation unit element (10).

6. A device for taking samples of noxious liquids according to Claim 5, **characterized in that** the single and detachable element of the circulation unit includes a cross slide (99) positioned on a top face of the support plate (9) and assembled in a detachable way on the support plate.

7. A device for taking samples of noxious liquids according to Claim 5, **characterized in that** it includes a backblowing assembly (105) made up of two pipes (106, 107) and means (99') for fixing to the support plate (9) and for connecting the pipes to said complementary parts of the aspiration arm and the return arm through one end, the other end of the pipes being able to be connected to the driving arm (19).

8. A device for taking samples of noxious liquids according to Claim 7, **characterized in that** the pipes (106, 107) are separated and the driving arm has a flexible part (96).

9. A device for taking samples of noxious liquids according to Claim 7, **characterized in that** the backblowing assembly includes a cross slide (99') identical to the cross slide (99) of the single and detachable element of the circulation unit.

10. A device for taking samples of noxious liquids according to Claim 2, **characterized in that** the application means include a flask support (67) that includes a lifter plate (66).

11. A device for taking samples of noxious liquids according to Claim 10, **characterized in that** the means for removing and replacing the stoppers (11) consist of a mechanical screwing and unscrewing device that has a head (113) capable of gripping the stoppers (108) and turning them and of lifting them from the flasks.

12. A device for taking samples of noxious liquids according to Claim 11, **characterized in that** the means of gripping the flasks include a movable support (65) that carries the lifter plate in order to position said plate in turn under the support plate (9) and the screwing and unscrewing apparatus (11), said plate being designed with an element (117) to stop the rotation of the flasks.

13. A device for taking samples of noxious liquids according to Claim 10, **characterized in that** the means of lifting the flasks include a crariking device (79) for controlling the lifter plate.

14. A device for taking samples of noxious liquids according to Claim 11, **characterized in that** the screwing and unscrewing apparatus includes a control crank (109) for the head (113) having a sliding axis of rotation (110) and a support bracket (118) for the crank (109) at a position remote from the flasks (67).

15. A device for taking samples of noxious liquids according to Claim 2, **characterized in that** the access through the enclosure include a flask introduction passageway and a connecting port to a movable container (31).
